# FASCICULE DE BREVET EUROPEEN

(11) **EP 2 563 605 B1**
(45) Date de publication et mention de la délivrance du brevet: **10.09.2014**
(21) Numéro de dépôt: 11717478.9
(22) Date de dépôt: 07.04.2011
(51) Int. Cl.: B60C 23/04

(54) **PROCEDE DE SURVEILLANCE DE LA PRESSION DANS UN PNEUMATIQUE D'UNE ROUE ET SYSTEME DE SURVEILLANCE**
VERFAHREN UND VORRICHTUNG ZUR ÜBERWACHUNG VON REIFENLUFTDRÜCKE
METHOD AND SYSTEM FOR MONITORING TIRE AIR PRESSURE

(30) Priorité: 18.10.2010 FR 1004080; 24.04.2010 DE 102010018149
(43) Date de publication de la demande: 06.03.2013
(73) Titulaire: Johnson Controls Technology Company, Holland, MI 49423 (US)
(72) Inventeur: ELOY, Frédéric, 78970 Mézières sur Seine (FR)
(74) Mandataire: Schwöbel, Thilo K.
(86) Numéro de dépôt international: PCT/EP2011/001730
(87) Numéro de publication internationale: WO 2011/131296

(56) Documents cités:
- US-A- 5 963 128
- US-A1- 2005 044 945
- US-A1- 2008 266 073

## Description

La présente invention concerne un procédé de surveillance de la pression dans un pneumatique d'une roue, et un système de surveillance de la pression dans un pneumatique d'une roue.

Afin d'assurer la sécurité et le confort du conducteur d'un véhicule automobile, il est impératif de connaître et de surveiller la pression des pneumatiques du véhicule. En informant de façon simple, fiable et régulière le conducteur sur le niveau de gonflage des pneumatiques de son véhicule, on contribue à en améliorer la sécurité, la consommation, à prolonger la vie des pneumatiques, etc. De tels systèmes comportent en général au moins un capteur de pression de type connu en soi.

Des procédés pour surveiller la pression des pneumatiques d'un véhicule sont connus, qui informent le conducteur ou le system d'alerte du véhicule d'une situation de sous-gonflage d'au moins un des pneumatiques du véhicule, tel le procédé et système divulgués dans US 5 963 128 en accord avec les préambules respectifs.

Par ailleurs, il est connu que les pneumatiques d'un véhicule requièrent une pression plus élevée lorsque le véhicule roule à des vitesses plus élevées.

Un inconvénient de tels dispositifs selon l'art connu consiste dans le fait que le réglage de la surveillance de la pression dans un pneumatique tient en général compte d'une seule valeur de pression prédéterminée, ce qui mène à des résultats sous-optimaux aussi pour les vitesses élevées et pour les vitesses réduites.

La présente invention a notamment pour but de palier aux inconvénients de l'art connu, et notamment ceux cités ci-dessus, et a également pour but de proposer un procédé de surveillance qui prend en compte différents niveaux de pression pour des vitesses différentes.

Suivant la présente invention, ce but est atteint, par un procédé de surveillance de la pression dans un pneumatique d'une roue, notamment d'un véhicule automobile, le véhicule automobile comprenant un module de capteur générant un signal indicatif d'une valeur de la pression momentanée dans le pneumatique, le véhicule automobile comprenant par ailleurs un module d'émission et un module de réception pour transmettre l'information de la valeur de la pression momentanée dans le pneumatique vers un module de gestion, le module de gestion étant susceptible de recevoir et de traiter l'information fournie, le module de gestion comprenant une première valeur de pression prédéterminée correspondant à une valeur plus élevée de vitesses du véhicule, et le module de gestion comprenant une deuxième valeur de pression prédéterminée correspondant à une valeur moins élevée de vitesses du véhicule, la première valeur de pression prédéterminée étant supérieure à la deuxième valeur de pression prédéterminée, le procédé de surveillance comprenant les étapes suivantes:
- la comparaison de la valeur de la pression momentanée avec une valeur de pression cible, la valeur de pression cible correspondant soit à la première valeur de pression prédéterminée, soit à la deuxième valeur de pression prédéterminée,
- le choix de la première valeur de pression prédéterminée comme valeur de la pression cible lorsque la pression momentanée est trop basse par rapport à la deuxième valeur de pression prédéterminée, et
- le choix de la deuxième valeur de pression prédéterminée comme valeur de la pression cible lorsque la pression momentanée est trop élevée par rapport à la première valeur de pression prédéterminée.

De par une telle réalisation d'un procédé de surveillance, il est avantageusement possible de change la valeur de la pression cible utilisé par le module de gestion dans le processus de surveillance de la pression des pneumatiques: il est possible de changer la valeur de la pression cible de la première valeur de pression prédéterminée vers la deuxième valeur de pression prédéterminée (c'est à dire de la valeur associée à l'utilisation des vitesses hautes ou élevées du véhicule vers la valeur associée à l'utilisation exclusivement des vitesses bases ou moins élevées du véhicule), et il est également possible de changer la valeur de la pression cible de la deuxième valeur de pression prédéterminée vers la première valeur de pression prédéterminée (c'est à dire de la valeur associée à l'utilisation des vitesses hautes ou élevées du véhicule c'est à dire de la valeur associée à l'utilisation exclusivement des bases ou moins élevées du véhicule vers la valeur associée à l'utilisation des vitesses hautes ou plus élevées du véhicule). Le procédé selon la présente invention peut être réalisé de façon à être robuste dans des situations opérationnelles différentes. En particulier, il est avantageusement possible de remplir les conditions d'une norme Européenne des systèmes de surveillance de la pression dans les pneumatiques de véhicules.

Un perfectionnement préféré de l'invention réside dans le fait que le choix de la valeur de la pression cible est changé exclusivement lorsque
- le pneumatique correspond à un état froid ou
- la pression dans le pneumatique à été augmenté de plus d'une troisième valeur de pression prédéterminée.

De par une telle réalisation d'un procédé de surveillance, il est avantageusement possible de change la valeur de la pression cible de manière sûre.

Encore un autre perfectionnement préféré de l'invention réside dans le fait que dans l'état froid du pneumatique, le pneumatique est arrêté pendant au moins un troisième intervalle de temps.

Un perfectionnement particulièrement préféré de l'invention réside dans le fait qu'un premier signal d'alerte est généré lorsque:
- la valeur de la pression cible correspond à la première valeur de pression prédéterminée, et
- la vitesse du véhicule est supérieure à un premier seuil de vitesse pendant un premier intervalle de temps prédéterminé.

Un autre perfectionnement particulièrement préféré de l'invention réside dans le fait que le premier signal d'alerte est effacé lorsque:
- la valeur de la pression cible correspond à la première valeur de pression prédéterminée, et
- la vitesse du véhicule est inférieure à un deuxième seuil de vitesse pendant un deuxième intervalle de temps prédéterminé, le premier seuil de vitesse étant supérieur au deuxième seuil de vitesse.

De par une telle réalisation d'un procédé de surveillance, il est avantageusement possible de réagir de manière flexible dans de différentes conditions de pression dans les pneumatiques.

Encore un autre perfectionnement préféré de l'invention réside dans le fait qu'un deuxième signal d'alerte est généré lorsque la valeur de la pression momentanée est trop basse par rapport à la valeur de pression cible.

Par ailleurs, la présente invention concerne également un système de surveillance de la pression dans un pneumatique d'une roue, notamment d'un véhicule automobile, le système comprenant un module de capteur générant un signal indicatif d'une valeur de la pression momentanée dans le pneumatique, le système comprenant par ailleurs un module d'émission et un module de réception pour transmettre l'information de la valeur de la pression momentanée dans le pneumatique vers un module de gestion, le module de gestion étant susceptible de recevoir et de traiter l'information fournie, le module de gestion comprenant une première valeur de pression prédéterminée correspondant à une valeur plus élevée de vitesses du véhicule, et le module de gestion comprenant une deuxième valeur de pression prédéterminée correspondant à une valeur moins élevée de vitesses du véhicule, la première valeur de pression prédéterminée étant supérieure à la deuxième valeur de pression prédéterminée, le système étant prévu tel que la valeur de pression cible corresponds soit à la première valeur de pression prédéterminée, soit à la deuxième valeur de pression prédéterminée, et que le choix de la première valeur de pression prédéterminée comme valeur de la pression cible est effectué lorsque la pression momentanée est trop basse par rapport à la deuxième valeur de pression prédéterminée, et que le choix de la deuxième valeur de pression prédéterminée comme valeur de la pression cible est effectué lorsque la pression momentanée est trop élevée par rapport à la première valeur de pression prédéterminée.

D'autres caractéristiques et avantages de l'invention ressortiront de la lecture de la description qui suit d'un mode de réalisation particulier non limitatif de la présente invention.

### BREVE DESCRIPTION DES DESSINS

L'invention sera mieux comprise grâce à la description ci-après, qui se rapporte à des modes de réalisation préférés, donnés à titre d'exemple non limitatifs et expliqués avec références au dessin schématique annexé, dans lequel :
la figure 1 est une vue schématique d'un ordinogramme du procédé de surveillance selon la présente invention, et
la figure 2 est une vue schématique d'un système de surveillance selon la présente invention.

### DESCRIPTION DES DESSINS

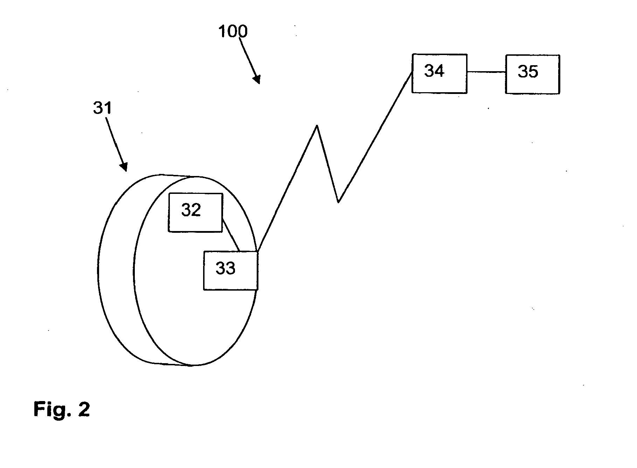

Comme le montre la figure 2 du dessin annexé, un système de surveillance 100 de la pression dans un pneumatique 31 d'une roue, notamment d'un véhicule automobile, comprend au moins un module de capteur 32. Le module de capteur 32 génère un signal indicatif d'une valeur de la pression momentanée dans le pneumatique 31 en question. Normalement, le véhicule comprend deux, trois, quatre ou plus de quatre roues et un pneumatique 31 pour chaque roue. Dans ce cas, il est préféré selon la présente invention que le système de surveillance 100 comprend un module de capteur 32 pour chaque pneumatique 31. Le système de surveillance 100 comprend par ailleurs - de préférence pour chaque pneumatique 32 - un module d'émission 33 et un module de réception 34 pour transmettre l'information de la valeur de la pression momentanée dans le pneumatique vers un module de gestion 35 du système (ce module 35 peut également être intégré dans le module de réception 34) de surveillance 100. Le module de gestion 35 reçoit et traite l'information fournie ou les informations fournies. De préférence, les informations sure les valeurs mesurées par le module de capteur 32 (ou la pluralité de modules de capteur32 présents dans le système de surveillance 100) sont transmis (à travers les modules d'émission 33 et de réception 34) par un signal radio fréquence.

Dans le module de gestion 35 est stocké une première valeur de pression prédéterminée et une deuxième valeur de pression prédéterminée. La première valeur de pression prédéterminée correspond à une valeur plus élevée de vitesses du véhicule, et la deuxième valeur de pression prédéterminée correspond à une valeur moins élevée de vitesses du véhicule, la première valeur de pression prédéterminée étant supérieure à la deuxième valeur de pression prédéterminée.

Selon la présente invention, le procédé de surveillance comprenant les étapes suivantes:
- la comparaison de la valeur de la pression momentanée avec une valeur de pression cible, la valeur de pression cible correspondant soit à la première valeur de pression prédéterminée, soit à la deuxième valeur de pression prédéterminée,
- le choix de la première valeur de pression prédéterminée comme valeur de la pression cible lorsque la pression momentanée est trop basse par rapport à la deuxième valeur de pression prédéterminée, et
- le choix de la deuxième valeur de pression prédéterminée comme valeur de la pression cible lorsque la pression momentanée est trop élevée par rapport à la première valeur de pression prédéterminée.

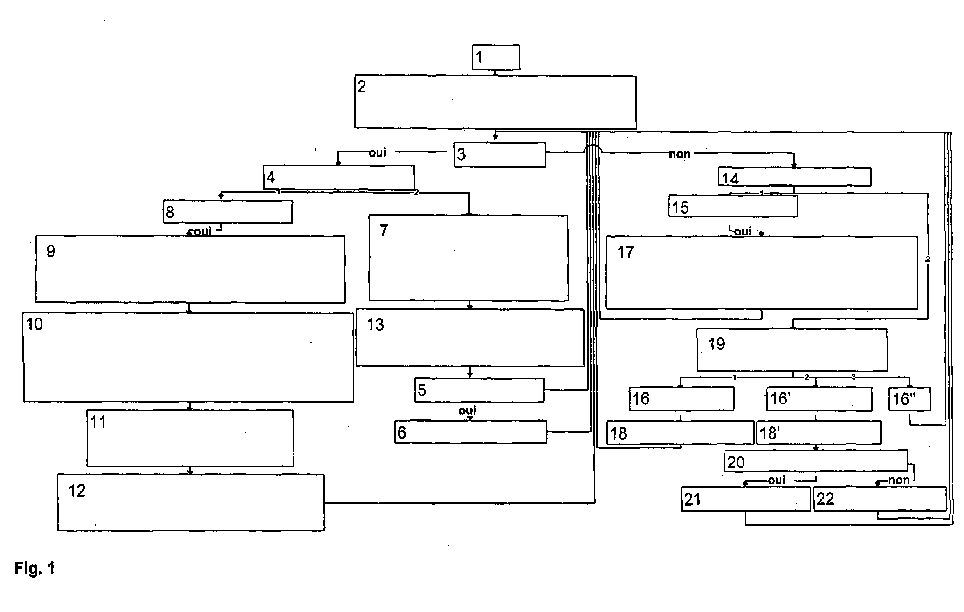

Un exemple d'un ordinogramme du procédé selon la présente invention est montre dans la figure 1. Les signes de référence de la figure 1 sont expliqués dans la suite:
Le signe de référence 1 désigne un point d'entrée dans le procédé inventif selon la présente invention.
Le signe de référence 2 désigne une phase d'initialisation dans laquelle:
   - la valeur de la pression cible (P_Preco) est choisi comme étant la deuxième valeur de pression prédéterminée (P_Low_Speed),
   - une valeur de la pression froide (P_Cold(I)) est mise égale à une valeur inactive (par exemple 0xFF),
   - une valeur de la pression chaude (P_Warm(I)) est mise égale à une valeur inactive (par exemple 0xFF),
   - une valeur de la dernière pression valable (P_Last_Valid(I)) est mise égale à une valeur inactive (par exemple 0xFF),
   - une valeur de la pression momentanée (P_Current(I)) est mise égale à une valeur inactive (par exemple 0xFF).

Le signe de référence 3 désigne une interrogation si le système électronique du véhicule est allumé. Si l'interrogation est positive, le procédé branche vers l'étape désignée par le signe de référence 4. Si l'interrogation est négative, le procédé branche vers l'étape désignée par le signe de référence 14.

Le signe de référence 4 désigne une action qui autorise le comptage du temps si et seulement si la vitesse du véhicule est supérieure à une vitesse prédéterminée (40 Km/H par exemple). Ce comptage de temps s'effectue tant que le compteur (Driving_Time) est inférieur à 15 minutes. Le procédé branche vers les étapes désignées par les signes de référence 8 et 7.

Le signe de référence 5 désigne une interrogation si le compteur de l'étape désignée par le signe de référence 4 est échue/écoulé c'est à dire si ce compteur a atteint une valeur supérieure à une valeur prédéterminée (par exemple 15 minutes). Si l'interrogation est positive, le procédé branche vers l'étape désignée par le signe de référence 6. Si l'interrogation est négative, le procédé branche vers l'étape désignée par le signe de référence 3

Le signe de référence 6 désigne une interrogation si la valeur de pression momentanée (P_Current(I)) est valable. Si l'interrogation est positive, la valeur de la pression chaude (P_Warm(I)) est considérée égale avec la valeur de pression momentanée (P_Current(I)). Le procédé branche vers l'étape désignée par le signe de référence 3.

Le signe de référence 7 désigne une étape concernant l'administration de modules de capteurs 32 manquant. Si un nombre prédéfinit (par exemple neuf) signaux haute fréquence ne sont pas reçus par le module de réception 34, le module de capteur 32 concerné est pris comme étant manquant. La valeur de la dernière pression valable (P_Last_Valid(I)) est mise à une valeur inactive (par exemple 0xFF), la valeur de la pression momentanée (P_Current(I)) est mise à une valeur inactive (par exemple 0xFF). Si au minimum un module de capteur 32 manque, un signal d'alerte "manque de système de surveillance" est mis en état actif. A la fin de cette étape le procédé branche vers l'étape 13 quelques soit le résultat de l'interrogation.

Le signe de référence 8 désigne une interrogation si des données radio fréquence ont été reçues. Si l'interrogation est positive, le procédé branche vers l'étape désignée par le signe de référence 9. Si l'interrogation est négative, le procédé branche vers l'étape désignée par le signe de référence 7

Le signe de référence 9 désigne une interrogation si un module de capteur 32 manque et si en même temps un certain nombre signaux radio fréquence (par exemple deux) ont été reçus en moins d'un intervalle de temps prédéterminé (par exemple trois minutes). Si l'interrogation est positive,
- le module de capteur 32 est considéré ne pas être manquant,
- la valeur de la pression momentanée (P_Current(I)) est considérée égale avec la valeur reçue de la pression (P_Received(I)) et la dernière pression valable (P_Last_Valid(I)) est considérée égale avec la valeur reçue de la pression (P_Received(I)),
- tous les erreurs associées à ce module de capteur 32 sont effacées. Le procédé branche vers l'étape désignée par le signe de référence 10.

Le signe de référence 10 désigne une étape de réglage de la pression. Lorsque:
- la vitesse du véhicule est inférieure à un seuil de vitesse, par exemple 4 km/h, ou le premier signal radio fréquence à été reçu après que la vitesse du véhicule soit devenue supérieure à un seuil de vitesse, par exemple 4 km/h, et
- la valeur reçue de la pression (P_Received(I)) est supérieure à la valeur de la dernière pression valable (P_Last_Valid(I)) plus une valeur de pression prédéterminé, par exemple 120 hPa. Dans ce cas:
- tous les erreurs associées à ce module de capteur 32 sont effacées,
- une actualisation des valeurs de la pression momentanée (P_Current(I)), de la dernière pression valable (P_Last_Valid(I)), de la pression froide (P_Cold(I)), et de la pression cible (P_Preco) est effectuée. Lorsque la condition suivante:
- la vitesse du véhicule est inférieure à un seuil de vitesse, par exemple 4 km/h, ou le premier signal radio fréquence à été reçu après que la vitesse du véhicule soit devenue supérieure à un seuil de vitesse, par exemple 4 km/h, et
- la valeur reçue de la pression (P_Received(I)) est supérieure à la valeur de la dernière pression valable (P_Last_Valid(I)) plus une valeur de pression prédéterminé, par exemple 120 hPa
n'est pas remplie, une actualisation des valeurs de la pression momentanée (P_Current(I)), de la dernière pression valable (P_Last_Valid(I)) est faite lorsque la vitesse du véhicule est supérieure à un seuil de vitesse, par exemple quatre km/h ou lorsque le temps entre deux réceptions consécutives de signaux radio fréquence (du même module de capteur 32) est supérieur à un intervalle de temps prédéterminé, par exemple de 60 secondes. Le procédé branche vers l'étape désignée par le signe de référence 11.

Le signe de référence 11 désigne une interrogation si la condition est remplie selon laquelle la valeur de la pression momentanée (P_Curren(I)) est valable et la valeur de la pression chaude (P_Warm(I)) est valable. Dans ce cas
- une administration d'un évènement "ponction" est réalisée lorsque la valeur de la pression momentanée (P_Current(I)) est inférieure ou égale à la valeur de la pression chaude (P_Warm(I)) moins une valeur de pression prédéterminée (DeltaP), et

une administration d'un événement "diffusion" est réalisée lorsque la valeur de la pression momentanée (P_Current(I)) est inférieure ou égale à la valeur de la pression chaude (P_Warm(I)) moins la somme d'une valeur de pression prédéterminée (DeltaP) et une valeur prédéterminée de la pression, par exemple 70 hPa. A la fin de cette étape le procédé branche vers l'étape 12 quelques soit le résultat de l'interrogation.

Le signe de référence 12 désigne une interrogation si la condition est remplie selon laquelle la valeur de la pression momentanée (P_Curren(I)) est valable et la valeur de la pression momentanée (P_Current(I)) est inférieure ou égale à la valeur de la pression cible (P_Preco) moins une valeur prédéterminée de la pression, par exemple 400 hPa. Dans ce cas un signal d'alerte est activé concernant le sous-gonflage du pneumatique considéré.

Si la condition est remplie selon laquelle la valeur de la pression momentanée (P_Curren(I)) est valable et pour tous les pneumatiques (ou toutes les roues) la valeur de la pression momentanée (P_Current(I)) est inférieure ou égale à la valeur de la pression cible (P_Preco) moins une valeur prédéterminée de la pression, par exemple 400 hPa, un signal d'alerte est activé concernant le sous-gonflage. Le procédé branche vers l'étape désignée par le signe de référence 3.

Le signe de référence 13 désigne une étape du procédé selon laquelle un premier signal d'alerte est généré lorsque la valeur de la pression cible (P_Preco) correspond à la deuxième valeur de pression prédéterminée, et la vitesse du véhicule est supérieure à un premier seuil de vitesse (par exemple 160 km/h) pendant un premier intervalle de temps prédéterminé (par exemple 5 minutes). Le premier signal d'alerte est effacé lorsque la valeur de la pression cible (P_Preco) correspond à la première valeur de pression prédéterminée, et la vitesse du véhicule est inférieure à un deuxième seuil de vitesse (par exemple 100 km/h) pendant un deuxième intervalle de temps prédéterminé (par exemple 5 minutes). Le procédé branche vers l'étape désignée par le signe de référence 5.

Le signe de référence 14 désigne une étape du procédé selon laquelle un temporisateur est démarré (qui conte le temps d'absence de mouvement du véhicule). Le procédé branche vers l'étape désignée par le signe de référence 15. Le signe de référence 15 désigne une interrogation si des données radio fréquence ont été reçues. Dans le cas affirmatif, le procédé branche vers l'étape désignée par le signe de référence 17. Dans le cas négatif, le procédé branche vers l'étape désignée par le signe de référence 19.

Le signe de référence 16 désigne une interrogation si le temporisateur de l'étape 14 a atteint un intervalle de temps prédéterminé, par exemple 45 minutes. Dans le cas affirmatif, le procédé branche vers l'étape désignée par le signe de référence 18.

Le signe de référence 16' désigne une interrogation si le temporisateur de l'étape 14 a atteint un autre intervalle de temps prédéterminé, par exemple 70 minutes. Dans le cas affirmatif, le procédé branche vers l'étape désignée par le signe de référence 18'. Le signe de référence 16" désigne une interrogation si aucun des situations des étapes 16 et 16' sont réalisés. Dans ce cas, le procédé branche vers l'étape désignée par le signe de référence 3.

Le signe de référence 17 désigne une étape de réglage de la pression. Lorsque:
- la valeur reçue de la pression (P_Received(I)) est supérieure à la valeur de la dernière pression valable (P_Last_Valid(I)) plus une valeur de pression prédéterminé, par exemple 120 hPa. Dans ce cas:
   - tous les erreurs associées à ce module de capteur 32 sont effacées,
   - une actualisation des valeurs de la pression momentanée (P_Current(I)), de la dernière pression valable (P_Last_Valid(I)), de la pression froide (P_Cold(I)), et de la pression cible (P_Preco) est effectuée.

Autrement, une actualisation des valeurs de la pression momentanée (P_Current(I)), de la dernière pression valable (P_Last_Valid(I)) est faite lorsque le temps entre deux signaux radio fréquence successifs du même module de capteur 32 est supérieur à un intervalle de temps prédéterminé, par exemple soixante secondes. Le procédé branche vers l'étape désignée par le signe de référence 3.

Le signe de référence 18 désigne une étape d'initialisation intermédiaire de la pression chaude (P_Warm(I)) est mis à non-valable. Le signe de référence 18' désigne une étape pour mettre la valeur de la pression froide (P_Cold(I)) égale à la valeur de la pression momentanée (P_Current(I)). Le procédé branche vers l'étape désignée par le signe de référence 20.

Le signe de référence 19 désigne l'administration de modules de capteur 32 manquant. Si un nombre prédéfinit (par exemple quatre) signaux haute fréquence ne sont pas reçus par le module de réception 34, pour un capteur 32 concerné la valeur de la pression momentanée de ce capteur est mis égale à une valeur inactive (par exemple 0xFF). Le procédé branche vers l'étape désignée par le signe de référence 16, 16'et 16".

Le signe de référence 20 désigne une interrogation si pour tous les pneumatiques (ou pour toutes les roues) la valeur de la pression froide (P_Cold(I)) est inférieur ou égal à la première valeur de pression prédéterminée moins une certaine valeur de pression prédéterminé, par exemple 100 hPa. Dans le cas affirmatif, le procédé branche vers l'étape désignée par le signe de référence 21. Dans le cas contraire, le procédé branche vers l'étape désignée par le signe de référence 22.

Le signe de référence 21 désigne une étape du procédé pendant laquelle la valeur de pression cible (P_Preco) est mis égale à la première valeur de pression prédéterminée. Le procédé branche vers l'étape désignée par le signe de référence 3.

Le signe de référence 22 désigne une étape du procédé pendant laquelle la valeur de pression cible (P_Preco) est mis égale à la deuxième valeur de pression prédéterminée. Le procédé branche vers l'étape désignée par le signe de référence 3.

## Revendications

1. Procédé de surveillance de la pression dans un pneumatique (31) d'une roue, notamment d'un véhicule automobile, le véhicule automobile comprenant un module de capteur (32) générant un signal indicatif d'une valeur de la pression momentanée dans le pneumatique (31), le véhicule automobile comprenant par ailleurs un module d'émission (33) et un module de réception (34) pour transmettre l'information de la valeur de la pression momentanée dans le pneumatique (31) vers un module de gestion (35), le module de gestion (35) étant susceptible de recevoir et de traiter l'information fournie, **caractérisé par** un module de gestion (35) comprenant une première valeur de pression prédéterminée correspondant à une valeur plus élevée de vitesses du véhicule, et un module de gestion (35) comprenant une deuxième valeur de pression prédéterminée correspondant à une valeur moins élevée de vitesses du véhicule, la première valeur de pression prédéterminée étant supérieure à la deuxième valeur de pression prédéterminée, le procédé de surveillance comprenant les étapes suivantes:
- - la comparaison de la valeur de la pression momentanée avec une valeur de pression cible, la valeur de pression cible correspondant soit à la première valeur de pression prédéterminée, soit à la deuxième valeur de pression prédéterminée,
- - le choix de la première valeur de pression prédéterminée comme valeur de la pression cible lorsque la pression momentanée est trop basse par rapport à la deuxième valeur de pression prédéterminée, et
- - le choix de la deuxième valeur de pression prédéterminée comme valeur de la pression cible lorsque la pression momentanée est trop élevée par rapport à la première valeur de pression prédéterminée.

2. Procédé de surveillance selon la revendication 1, **caractérisé en ce que** le choix de la valeur de la pression cible est changé exclusivement lorsque
- - le pneumatique (31) correspond à un état froid ou
- - la pression dans le pneumatique (31) à été augmenté de plus d'une troisième valeur de pression prédéterminée.

3. Procédé de surveillance selon l'une quelconque des revendications précédentes, **caractérisé en ce que** dans l'état froid du pneumatique (31), le pneumatique (31) est arrêté pendant au moins un troisième intervalle de temps.

4. Procédé de surveillance selon l'une quelconque des revendications précédentes, **caractérisé en ce qu'**un premier signal d'alerte est généré lorsque:
- - la valeur de la pression cible correspond à la deuxième valeur de pression prédéterminée, et
- - la vitesse du véhicule est supérieure à un premier seuil de vitesse pendant un premier intervalle de temps prédéterminé.

5. Procédé de surveillance selon la revendication 4, **caractérisé en ce que** le premier signal d'alerte est effacé lorsque:
- - la valeur de la pression cible correspond à la première valeur de pression prédéterminée, et
- - la vitesse du véhicule est inférieure à un deuxième seuil de vitesse pendant un deuxième intervalle de temps prédéterminé, le premier seuil de vitesse étant supérieur au deuxième seuil de vitesse.

6. Procédé de surveillance selon l'une quelconque des revendications précédentes, **caractérisé en ce qu'**un deuxième signal d'alerte est généré lorsque la valeur de la pression momentanée est trop basse par rapport à la valeur de pression cible.

7. Système de surveillance (100) de la pression dans un pneumatique (31) d'une roue, notamment d'un véhicule automobile, le système de surveillance (100) comprenant un module de capteur (32) générant un signal indicatif d'une valeur de la pression momentanée dans le pneumatique (31), le système de surveillance (100) comprenant par ailleurs un module d'émission (33) et un module de réception (34) pour
transmettre l'information de la valeur de la pression momentanée dans le pneumatique (31) vers un module de gestion (35), **caractérisé par** un module de gestion (35) étant susceptible de recevoir et de traiter l'information fournie, ce module de gestion (35) comprenant une première valeur de pression prédéterminée correspondant à une valeur plus élevée de vitesses du véhicule, et le module de gestion (35) comprenant une deuxième valeur de pression prédéterminée correspondant à une valeur moins élevée de vitesses du véhicule, la première valeur de pression prédéterminée étant supérieure à la deuxième valeur de pression prédéterminée, le système étant prévu tel que la valeur de pression cible corresponds soit à la première valeur de pression prédéterminée, soit à la deuxième valeur de pression prédéterminée, et que le choix de la première valeur de pression prédéterminée comme valeur de la pression cible est effectué lorsque la pression momentanée est trop basse par rapport à la deuxième valeur de pression prédéterminée, et que le choix de la deuxième valeur de pression prédéterminée comme valeur de la pression cible est effectué lorsque la pression momentanée est trop élevée par rapport à la première valeur de pression prédéterminée.

## Patentansprüche

1. Verfahren zur Überwachung des Drucks in einem Luftreifen (31) eines Rads, insbesondere eines Kraftfahrzeugs, wobei das Kraftfahrzeug ein Sensormodul (32) enthält, das ein einen Wert des Augenblicksdrucks im Luftreifen (31) anzeigendes Signal erzeugt, wobei das Kraftfahrzeug außerdem ein Sendemodul (33) und ein Empfangsmodul (34) enthält, um die Information über den Wert des Augenblicksdrucks im Luftreifen (31) an ein Verwaltungsmodul (35) zu übertragen, wobei das Verwaltungsmodul (35) die gelieferte Information empfangen und verarbeiten kann, **gekennzeichnet durch** ein Verwaltungsmodul (35), das einen ersten vorbestimmten Druckwert enthält, der einem höheren Geschwindigkeitswert des Fahrzeugs entspricht, und ein Verwaltungsmodul (35), das einen zweiten vorbestimmten Druckwert enthält, der einem weniger hohen Geschwindigkeitswert des Fahrzeugs entspricht, wobei der erste vorbestimmte Druckwert höher als der zweite vorbestimmte Druckwert ist, wobei das Überwachungsverfahren die folgenden Schritte enthält:
- Vergleich des Werts des Augenblicksdrucks mit einem Zieldruckwert, wobei der Zieldruckwert entweder dem ersten vorbestimmten Druckwert oder dem zweiten vorbestimmten Druckwert entspricht,
- Wahl des ersten vorbestimmten Druckwerts als Wert des Zieldrucks, wenn der Augenblicksdruck bezüglich des zweiten vorbestimmten Druckwerts zu niedrig ist, und
- Wahl des zweiten vorbestimmten Druckwerts als Wert des Zieldrucks, wenn der Augenblicksdruck bezüglich des ersten vorbestimmten Druckwerts zu hoch ist.

2. Überwachungsverfahren nach Anspruch 1, **dadurch gekennzeichnet, dass** die Wahl des Werts des Zieldrucks ausschließlich dann geändert wird, wenn
- der Luftreifen (31) einem Kaltzustand entspricht, oder
- der Druck im Luftreifen (31) zusätzlich um einen dritten vorbestimmten Druckwert erhöht wurde.

3. Überwachungsverfahren nach einem der vorhergehenden Ansprüche, **dadurch gekennzeichnet, dass** im Kaltzustand des Luftreifens (31) der Luftreifen (31) während mindestens eines dritten Zeitraums angehalten wird.

4. Überwachungsverfahren nach einem der vorhergehenden Ansprüche, **dadurch gekennzeichnet, dass** ein erstes Warnsignal erzeugt wird, wenn:
- der Wert des Zieldrucks dem zweiten vorbestimmten Druckwert entspricht, und
- die Geschwindigkeit des Fahrzeugs höher ist als eine erste Geschwindigkeitsschwelle während eines ersten vorbestimmten Zeitraums.

5. Überwachungsverfahren nach Anspruch 4, **dadurch gekennzeichnet, dass** das erste Warnsignal gelöscht wird, wenn:
- der Wert des Zieldrucks dem ersten vorbestimmten Druckwert entspricht, und
- die Geschwindigkeit des Fahrzeugs niedriger als eine zweite Geschwindigkeitsschwelle während eines zweiten vorbestimmten Zeitraums ist, wobei die erste Geschwindigkeitsschwelle höher ist als die zweite Geschwindigkeitsschwelle.

6. Überwachungsverfahren nach einem der vorhergehenden Ansprüche, **dadurch gekennzeichnet, dass** ein zweites Warnsignal erzeugt wird, wenn der Wert des Augenblicksdrucks bezüglich des Zieldruckwerts zu niedrig ist.

7. Überwachungssystem (100) des Drucks in einem Luftreifen (31) eines Rads, insbesondere eines Kraftfahrzeugs, wobei das Überwachungssystem (100) ein Sensormodul (32) enthält, das ein einen Wert des Augenblicksdrucks im Luftreifen (31) anzeigendes Signal erzeugt, wobei das Überwachungssystem (100) außerdem ein Sendemodul (33) und ein Empfangsmodul (34) enthält, um die Information über den Wert des Augenblicksdrucks im Luftreifen (31) an ein Verwaltungsmodul (35) zu übertragen, **gekennzeichnet durch** ein Verwaltungsmodul (35), das die gelieferte Information empfangen und verarbeiten kann, wobei dieses Verwaltungsmodul (35) einen ersten vorbestimmten Druckwert enthält, der einem höheren Geschwindigkeitswert des Fahrzeugs entspricht, und das Verwaltungsmodul (35) einen zweiten vorbestimmten Druckwert enthält, der einem weniger hohen Geschwindigkeitswert des Fahrzeugs entspricht, wobei der erste vorbestimmte Druckwert höher als der zweite vorbestimmte Druckwert ist, wobei das System so vorgesehen ist, dass der Zieldruckwert entweder dem ersten vorbestimmten Druckwert oder dem zweiten vorbestimmten Druckwert entspricht, und dass die Wahl des ersten vorbestimmten Druckwerts als Wert des Zieldrucks durchgeführt wird, wenn der Augenblicksdruck bezüglich des zweiten vorbestimmten Druckwerts zu niedrig ist, und dass die Wahl des zweiten vorbestimmten Druckwerts als Wert des Zieldrucks durchgeführt wird, wenn der Augenblicksdruck bezüglich des ersten vorbestimmten Druckwerts zu hoch ist.

## Claims

1. Method for monitoring the pressure in a tire (31) of a wheel, in particular of a motor vehicle, the motor vehicle comprising a sensor module (32) generating a signal indicative of a momentary pressure value in the tire (31), the motor vehicle also comprising a transmission module (33) and a reception module (34) for transmitting the information of the momentary pressure value in the tire (31) to a management module (35), the management module (35) being capable of receiving and processing the information supplied, **characterized by** a management module (35) including a first predetermined pressure value corresponding to a higher vehicle speed value, and a management module (35) including a second predetermined pressure value corresponding to a lower vehicle speed value, the first predetermined pressure value being greater than the second predetermined pressure value, the monitoring method comprising the following steps:
- comparison of the momentary pressure value with a target pressure value, the target pressure value corresponding either to the first predetermined pressure value or to the second predetermined pressure value,
- choice of the first predetermined pressure value as target pressure value when the momentary pressure is too low relative to the second predetermined pressure value, and
- choice of the second predetermined pressure value as target pressure value when the momentary pressure is too high relative to the first predetermined pressure value.

2. Monitoring method according to Claim 1, **characterized in that** the choice of the target pressure value is changed only when
- the tire (31) corresponds to a cold state or
- the pressure in the tire (31) has been increased by more than a third predetermined pressure value.

3. Monitoring method according to either one of the preceding claims, **characterized in that**, in the cold state of the tire (31), the tire (31) is stopped during at least a third time interval.

4. Monitoring method according to any one of the preceding claims, **characterized in that** a first alert signal is generated when:
- the target pressure value corresponds to the second predetermined pressure value, and
- the vehicle speed is greater than a first speed threshold during a first predetermined time interval.

5. Monitoring method according to Claim 4, **characterized in that** the first alert signal is cleared when:
- the target pressure value corresponds to the first predetermined pressure value, and
- the vehicle speed is less than a second speed threshold during a second predetermined time interval, the first speed threshold being greater than the second speed threshold.

6. Monitoring method according to any one of the preceding claims, **characterized in that** a second alert signal is generated when the momentary pressure value is too low relative to the target pressure value.

7. System (100) for monitoring the pressure in a tire (31) of a wheel, in particular of a motor vehicle, the monitoring system (100) comprising a sensor module (32) generating a signal indicative of a momentary pressure value in the tire (31), the monitoring system (100) also comprising a transmission module (33) and a reception module (34) for transmitting the information of the momentary pressure value in the tire (31) to a management module (35), **characterized by** a management module (35) being capable of receiving and processing the information supplied, this management module (35) including a first predetermined pressure value corresponding to a higher vehicle speed value, and the management module (35) including a second predetermined pressure value corresponding to a lower vehicle speed value, the first predetermined pressure value being greater than the second predetermined pressure value, the system being designed such that the target pressure value corresponds either to the first predetermined pressure value or to the second predetermined pressure value, and that the choice of the first predetermined pressure value as target pressure value is made when the momentary pressure is too low relative to the second predetermined pressure value, and that the choice of the second predetermined pressure value as target pressure value is made when the momentary pressure is too high relative to the first predetermined pressure value.
